# EUROPEAN PATENT SPECIFICATION

(11) **EP 0 788 402 B1**
(45) Date of publication and mention of the grant of the patent: **23.05.2001**
(21) Application number: 95903061.0
(22) Date of filing: 24.10.1994
(51) Int. Cl.: B01J 3/04, F04C 29/04

(54) **AN ARRANGEMENT IN AUTOCLAVING SYSTEMS**
ANORDNUNG FÜR AUTOKLAVSYSTEME
AGENCEMENT POUR SYSTEMES DE STERILISATION EN AUTOCLAVE

(43) Date of publication of application: 13.08.1997
(73) Proprietor: GETINGE AB, 310 44 Getinge (SE)
(72) Inventor: ERICSON, Rune, S-302 44 Halmstad (SE)
(74) Representative: Ferkinghoff, Claes-Göran
(86) International application number: SE9400998
(87) International publication number: WO9612557

(56) References cited:
- DE-B- 1 302 783
- SU-A- 1 110 632
- US-A- 4 718 834
- DERWENT'S ABSTRACT, No. 85-67776/11, Week 8511; & SU,A,1 110 632 (RAILWAY TRANSPORT INST), 30 August 1984.

## Description

The invention concerns a system in autoclaving according to which an autoclave chamber is evacuated by means of a vacuum pump of liquid ring type. The latter is connected to the chamber by way of an outlet and is inserted in a water circulation circuit in which the water has a sealing and cooling function.

Vacuum pumps of liquid ring type are used in circulation systems in various applications. This type of pumps is best suited for use in connection with comparatively static processes wherein the pumping media temperature remains comparatively stable.

Owing to their excellent evacuation capacities such pumps are used also in sterilizing processes. In such applications the conditions are, however, different. In sterilizers the sterilization process starts by a number of evacuation steps which alternate with vapour intake steps. As a result, the temperature inside the pump rises more or less instantaneously at the beginning of each vacuum suction instance and need to be lowered immediately in order to prevent the water in the pump from vaporizing. Should this happen, the suction efficiency of the pump is diminished and it is not possible to evacuate the autoclaving chamber to the desired vacuum.

In order to master the temperature rises tending to occur inside the pump upon each vacuum suction instance in an autoclaving process it is known to connect the circulation circuit to a circulation or buffer vessel filled with water. The circulation water is allowed to pass through the vessel and be mixed with the water contained therein, whereby it is cooled. A thermostat detects any increase of the water temperature inside the vessel and when a predetermined temperature level is surpassed it opens a valve admitting cooling water into the vessel, which lowers the temperature of the water inside the vessel. As the level inside the vessel rises water escapes through an overflow opening in the vessel.

This hitherto generally applied cooling system does, however, suffer from several drawbacks. The purpose of a circulation system has been to save water. In reality, this purpose has so far not been achieved at all or only moderately so, depending on the inertia in the entire cooling system that includes a water tank containing a considerable volume of water, and a thermostat which, owing to hysteresis, reacts with delay upon opening as well as closing of said valve to the tank. In addition, mixing of the circulation water with the water inside the tank has a levelling effect on the temperature, i.e. the temperature of the water inside the tank rises successively with the result that it becomes necessary to supplement external cooling water into the tank in increasingly large amounts in order to maintain the cooling of the pump at the required level.

Another serious drawback is that the condensate, which the pump sucks from the autoclaving chamber and which is polluted, is mixed with the circulation water as well as with the water inside the tank. Considerable amounts of contaminated water thus are gradually emitted.

The subject invention provides a cooling system in autoclaving operations, eliminating the above outlined disadvantages and providing considerable water savings while at the same time the admixture of fresh water into contaminated water is effected to a very reduced degree only. The characteristic features of this system are defined in the dependent claims.

The invention will be described in closer detail in the following with reference to the accompanying drawings illustrating a flow chart for sterilizing operations.

In the drawings, an autoclave 1 is illustrated schematically, said autoclave 1 comprising a chamber 2 and a shell 3. By way of a valve 4 the autoclave 1 is provided with a steam inlet to the chamber 2 and by means of a valve 5 with a steam inlet to the shell 3. A third valve 6 is inserted in an outlet line 7 from the chamber 2. This outlet line 7 leads to a vacuum pump 8 of liquid ring type which is inserted in circulation circuit consisting of a waste line 9 and circulation lines 10, 11. A ventilation line 12 extends from the waste line 9 for removal of air, and a condensate line 13 extends from the shell 3 of the autoclave 1 by way of a steam trap 14 to the waste line 9. A condenser 15 is inserted in the outlet line 7.

A comparatively small tank 16 containing cool water 17 and having a water inlet 18 with an air gap serving as a guard against reverse suction is connected by way of a line 19 to the circulation circuit 9, 10, 11. A throttle 20 is inserted in the line 19. In accordance with the invention the circulation water through the pump 8 is successively diluted. The primary purpose of the dilution is to improve the pump efficiency at low pressures. Inside line 10 a throttle 21 preferably also is arranged, said throttle being adjustable in response to the water pump requirements.

Another advantage of the dilution of the contaminated circulation water through the pump 8 is that any growth of bacteria in the pipe lines 9, 10, 11 of the circulation circuit is prevented.

In accordance with the invention a heat exchanger 22 is likewise connected to the circulation circuit 9, 10, 11. By means of a valve 23 the heat exchanger is connected to a cooling water intake line 24. A line 25 is inserted between the heat exchanger 22 and the condenser 15 and a line 26 extends from the condenser 15 via another heat exchanger 27 to an outlet. The latter heat exchanger 27 serves the purpose of preventing vapour from forming upon discharge of contaminated water from line 9 as well as condensate from the vapour trap 14.

In the case of normal autoclave operations the process takes place in the following manner. Initially, the vacuum pump 8 evacuates the chamber 2 from an atmospheric pressure down to a negative pressure of approximately 100-70 mbar. The valve 4 is then opened and vapour is let into the chamber 2, whereupon the valve 4 is again closed and the pump 8 again evacuates the chamber 2. This process is repeated two or three times before initiation of the sterilization operation proper. Steam is also let into the shell 3.

The temperature tends to rise considerably inside the pump 8 already during the second evacuation operation, i.e. after the first steam admission. The liquid circulating through the pump has a sealing as well as a cooling function. Consequently, if the temperature of the pump as well as that of the circulation liquid are allowed to rise to a level of imminent risk of vaporization of the liquid in the pump the pumping function deteriorates. For this reason the valve 23 is opened and cooling water is allowed to pass through the heat exchanger 22, resulting in cooling of the circulation water in line 10. The cooling water is allowed to continue through line 25 to the condenser 15 and from there through line 26 and the heat exchanger 27 to the waste. There is no admixture of clean water from the line 24 to the circulation system 9, 10, 11. Contaminated condensing water from the autoclaving chamber 22 as well as a smaller amount of cooling water 17 supplied from the tank 16 are used as means of sealing the vacuum pump 8, and cooling water from line 24 is used to cool the pump, via the heat exchanger 22 and the circulation circuit 9, 10, 11. Accordingly, the system in accordance with the invention is structured from two separate water systems.

The same principle in accordance with the system of the invention applies also for evacuation of steam from the chamber 2 after the sterilization operation when low vacuum pressure is required to dry the material inside chamber 2.

The use of this new system results in very limited amounts of contaminated water flowing to the waste compared to what has hitherto been the case. At the same time, considerable savings of water are achieved, which in accordance with the described example may amount to approximately 40% compared with conventional cooling systems.

It is however not necessary that the water from line 26 flows directly to a waste line as shown in the drawings. Instead, it is quite possible to connect line 24 as well as line 26 to a supply water tank which is provided with cooling means of a prior-art nature, and for instance coupled to a cooling tower. In the case of such closed system wherein the cooling water is repeatedly re-used it becomes possible to obtain water savings up to 75% compared with conventional systems, without lowering the pump efficiency.

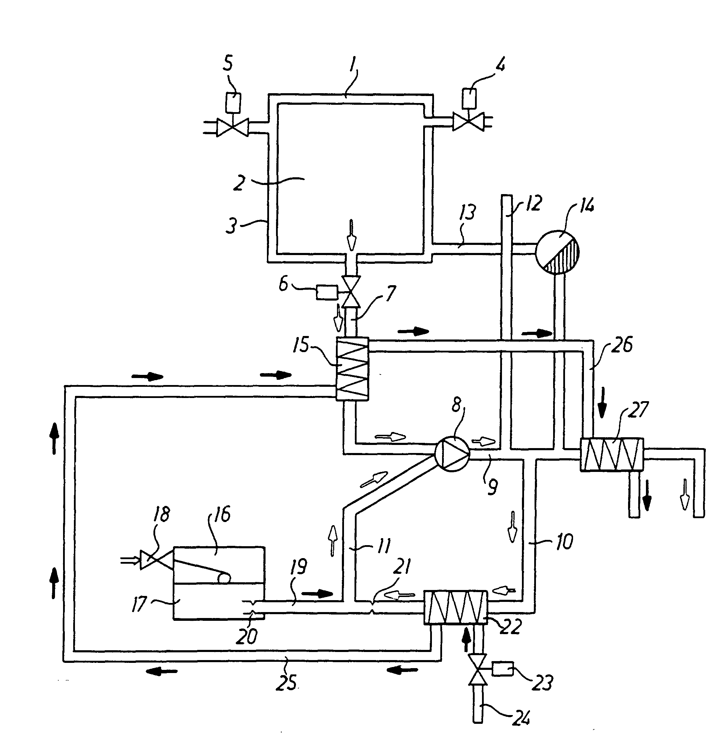

## Claims

1. An arrangement in sterilazation autoclaving systems, wherein an autoclaving chamber (2) is evacuated by means of a vacuum pump (8) of liquid ring type, which pump is connected to the chamber (2) by way of an outlet line (7) and inserted in a water circulation circuit (9, 10, 11) for the purpose of sealing and cooling the pump (8), **characterized** in that a line (19) is inserted in the circulation circuit (9, 10, 11) and arranged to gradually supply the circulation circuit (9, 10, 11) with supplementary cooling water to ensure pump efficiency at low pressures, and in that the system also includes a cooling water circuit (24, 25, 26) which is in indirect contact with the circulation circuit (9, 10, 11) via a first heat exchanger (22) through which flows the water of the circulation circuit (9, 10, 11) and which is arranged to cool said water.

2. A system as claimed in claim 1, **characterized** in that the line for supplying supplemental cooling water (19) extends from a supply tank (16) containing cooling water (17) and a cooling water intake (18) with an air break.

3. A system as claimed in claim 1, **characterized** in that a condenser (15) is inserted in the cooling water circuit (24, 25, 26), medium discharged from the chamber (2) flowing through said condenser separately from the cooling water.

4. A system as claimed in claim 1, **characterized** in that a second heat exchanger (27) is inserted in the cooling water circuit (24, 25, 26), water leaving said circulation circuit (9, 10, 11) flowing through said heat exchanger (27) to be cooled by said heat exchanger.

## Patentansprüche

1. Anordnung für Sterilisationsautoklavsysteme, bei der eine Autoklavkammer (2) mittels einer Flüssigkeitsring-Vakuumpumpe (8) evakuiert wird, wobei die Pumpe mittels einer Auslaßleitung (7) mit der Kammer (2) verbunden und zum Zwecke ihrer Abdichtung und Kühlung in einen Wasserzirkulationskreis (9, 10, 11) geschaltet ist, dadurch gekennzeichnet, daß eine Leitung (19) in den Zirkulationskreis (9, 10, 11) geschaltet und so angeordnet ist, daß dem Zirkulationskreis (9, 10, 11) allmählich zusätzliches Kühlwasser zugeführt wird, um die Pumpenleistung bei niedrigen Drücken zu gewährleisten, und daß das System des weiteren einen Kühlwasserkreis (24, 25, 26) enthält, der über einen ersten Wärmetauscher (22), durch den das Wasser des Zirkulationskreises (9, 10, 11) fließt und der zur Kühlung des Wassers angeordnet ist, in indirektem Kontakt mit dem Zirkulationskreis (9, 10, 11) steht.

2. System nach Anspruch 1, dadurch gekennzeichnet, daß sich die Leitung (19) zur Zuführung zusätzlichen Kühlwassers ausgehend von einem Vorratstank (16), der Kühlwasser (17) und einen Kühlwassereinlaß (18) mit einer Lufttrennung enthält, erstreckt.

3. System nach Anspruch 1, dadurch gekennzeichnet, daß ein Kondensator (15) in den Kühlwasserkreis (24, 25, 26) geschaltet ist, wobei aus der Kammer (2) abgelassenes Medium getrennt von dem Kühlwasser durch den Kondensator fließt.

4. System nach Anspruch 1, dadurch gekennzeichnet, daß ein zweiter Wärmetauscher (27) in den Kühlwasserkreis (24, 25, 26) geschaltet ist, wobei den Zirkulationskreis (9, 10, 11) verlassendes Wasser zur Kühlung durch den Wärmetauscher (27) durch diesen letzteren fließt.

## Revendications

1. Arrangement pour systèmes de stérilisation en autoclave, dans lequel on fait le vide dans une chambre autoclave (2) à l'aide d'une pompe à vide (8) du type à circulation de liquide, ladite pompe étant reliée à la chambre (2) à l'aide d'un conduit de sortie (7) et étant insérée dans un circuit de circulation d'eau (9, 10, 11) dans le but de refroidir la pompe (8) et de la rendre étanche, caractérisé en ce qu'on insère un conduit (19) dans le circuit de circulation (9, 10, 11) et on l'arrange pour alimenter progressivement le circuit de circulation (9, 10, 11) avec une quantité supplémentaire d'eau de refroidissement pour garantir un effet de pompage à basse pression, et en ce que le système englobe également un circuit d'eau de refroidissement (24, 25, 26) qui est mis en contact indirect avec le circuit de circulation (9, 10, 11) via un premier échangeur de chaleur (22) à travers lequel s'écoule l'eau du circuit de circulation (9, 10, 11) et qui est arrangé pour refroidir ladite eau.

2. Système selon la revendication 1, caractérisé en ce que le conduit (19) pour alimenter une quantité supplémentaire d'eau de refroidissement s'étend depuis un réservoir d'alimentation (16) contenant de l'eau de refroidissement (17) et une entrée d'eau de refroidissement (18) comprenant un dispositif d'arrêt pour l'air.

3. Système selon la revendication 1, caractérisé en ce qu'on insère un condenseur (15) dans le circuit d'eau de refroidissement (24, 25, 26), le milieu évacué de la chambre (2) s'écoulant à travers ledit condenseur de manière séparée par rapport à l'eau de refroidissement.

4. Système selon la revendication 1, caractérisé en ce qu'on insère un deuxième échangeur de chaleur (27) dans le circuit d'eau de refroidissement (24, 25, 26), l'eau quittant ledit circuit de circulation (9, 10, 11) s'écoulant à travers ledit échangeur de chaleur (27) pour être refroidie par ledit échangeur de chaleur.
